# EUROPEAN PATENT APPLICATION

(11) **EP 4 280 785 A1**
(43) Date of publication of application: **22.11.2023**
(21) Application number: 21918268.0
(22) Date of filing: 13.01.2021
(51) Int. Cl.: H04W 74/08

(54) **METHOD AND APPARATUS FOR CONFIGURING RANDOM ACCESS PARAMETER, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/071506
(87) International publication number: WO 2022/151052

(57) **Abstract**

The present disclosure relates to a method and apparatus for configuring a random access parameter, and a storage medium. The method for configuring a random access parameter is characterized by being applied to a network device, and comprising: determining a physical uplink control channel configuration parameter, the physical uplink control channel configuration parameter comprising configuration parameters for a terminal of a first type and a terminal of a second type to perform message 4 hybrid automatic repeat request feedback in a random access process, the terminal of the first type and the terminal of the second type having different capabilities. By means of the present disclosure, configuration of a physical uplink control channel configuration parameter for terminals having different capabilities can be achieved, thereby matching communication capabilities of the terminals having different capabilities.

## Description

### TECHNICAL FIELD

The disclosure relates to the field of communication technologies, and particularly, to a method and an apparatus for configuring a random access parameter, and a storage medium.

### BACKGROUND

With the continuous development and popularization of Internet of Things (IoT) services such as video surveillance, smart home, wearable devices, industrial sensing and monitoring, and other services, these services usually require a rate of dozens to 100M and also have a relatively high requirement on a delay. However, a machine type communication (MTC) technology and a narrow band IoT (NB-IoT) technology in the related art are difficult to satisfy these requirements. Therefore, a new-type terminal is redesigned in fifth generation new radio (5G NR) to cover requirements of middle-end IoT devices. In a current 3GPP standardization, the new-type terminal is referred to as a reduced capability user equipment (UE) or an NR-lite or a redcap terminal.

With the introduction of the redcap terminal, capabilities of terminals are differentiated. For example, a transceiving bandwidth of the redcap terminal is limited relative to a normal UE. Therefore, an existing manner for configuring a random access parameter may not satisfy differentiated terminal requirements.

### SUMMARY

To overcome the problems existing in the related art, a method and an apparatus for configuring a random access parameter, and a storage medium are provided in the disclosure.

According to a first aspect of embodiments of the disclosure, a method for configuring a random access parameter is provided. The method is applicable to a network device. The method for configuring a random access parameter includes: determining a physical uplink control channel (PUCCH) configuration parameter, in which the PUCCH configuration parameter includes a configuration parameter of performing hybrid automatic repeat request feedback of a fourth message (Msg.4 HARQ feedback) in a random access process for a first-type terminal and a second-type terminal, and a capability of the first-type terminal is different from a capability of the second-type terminal.

In an implementation, the PUCCH configuration parameter includes a first PUCCH configuration parameter and a second PUCCH configuration parameter; the first PUCCH configuration parameter is partially different from the second PUCCH configuration parameter; and the first PUCCH configuration parameter corresponds to the first-type terminal and the second PUCCH configuration parameter corresponds to the second-type terminal.

In an implementation, at least one of the following parameters in the first PUCCH configuration parameter and the second PUCCH configuration parameter is different:
a physical resource block (PRB) located by the PUCCH; a PUCCH format; the PUCCH supporting frequency hopping (FH) or the PUCCH not supporting FH; a PRB position where the PUCCH supports FH; and an FH width when the PUCCH supporting FH.

In an implementation, the capability of the first-type terminal is stronger than the capability of the second-type terminal;
the first PUCCH configuration parameter includes a configuration parameter supporting FH, and the second PUCCH configuration parameter includes a configuration parameter not supporting FH; and/or an FH width configured in the first PUCCH configuration parameter is greater than an FH width configured in the second PUCCH configuration parameter.

In an implementation, the PUCCH configuration parameter includes a common PUCCH configuration parameter for the first-type terminal and the second-type terminal.

In an implementation, the capability of the first-type terminal is stronger than the capability of the second-type terminal;
the PUCCH configuration parameter includes one or a combination of:
the PUCCH not supporting FH; and the PUCCH supporting FH and an FH width being within a bandwidth range supported by the second-type terminal.

In an implementation, the method for configuring a random access parameter further includes: sending the PUCCH configuration parameter.

In an implementation, the PUCCH configuration parameter is carried in remaining minimum system information (RMSI).

In an implementation, the method for configuring a random access parameter further includes:
receiving a terminal capability reported by a terminal, in which the terminal capability represents that the terminal is the first-type terminal or the second-type terminal; and determining a resource for the terminal to perform the Msg.4 HARQ feedback according to the terminal capability.

According to a second aspect of embodiments of the disclosure, a method for configuring a random access parameter is provided. The method is applicable to a terminal. The method for configuring a random access parameter includes: determining a PUCCH configuration parameter, in which the PUCCH configuration parameter includes a configuration parameter of performing Msg.4 HARQ feedback in a random access process for a first-type terminal and a second-type terminal, and a capability of the first-type terminal is different from a capability of the second-type terminal; and determining a resource of performing the Msg.4 HARQ feedback in the random access process according to the PUCCH configuration parameter.

In an implementation, determining the PUCCH configuration parameter includes:
determining a terminal type, in which the terminal type is the first-type terminal or the second-type terminal, and the capability of the first-type terminal is different from the capability of the second-type terminal; and determining the PUCCH configuration parameter according to the terminal type; the PUCCH configuration parameter including a first PUCCH configuration parameter and a second PUCCH configuration parameter; the first PUCCH configuration parameter being partially different from the second PUCCH configuration parameter; and the first PUCCH configuration parameter corresponding to the first-type terminal, and the second PUCCH configuration parameter corresponding to the second-type terminal.

In an implementation, at least one of the following parameters in the first PUCCH configuration parameter and the second PUCCH configuration parameter is different:
a PRB located by the PUCCH; a PUCCH format; the PUCCH supporting FH or the PUCCH not supporting FH; a PRB position where the PUCCH supports FH; and an FH width when the PUCCH supporting FH.

In an implementation, the capability of the first-type terminal is stronger than the capability of the second-type terminal;
the first PUCCH configuration parameter includes a configuration parameter supporting FH, and the second PUCCH configuration parameter includes a configuration parameter not supporting FH; and/or an FH width configured in the first PUCCH configuration parameter is greater than an FH width configured in the second PUCCH configuration parameter.

In an implementation, the PUCCH configuration parameter includes a common PUCCH configuration parameter for the first-type terminal and the second-type terminal.

In an implementation, the capability of the first-type terminal is stronger than the capability of the second-type terminal;
the PUCCH configuration parameter includes one or a combination of the PUCCH not supporting FH; and the PUCCH supporting FH and an FH width being within a bandwidth range supported by the second-type terminal.

In an implementation, determining the PUCCH configuration parameter includes:
receiving the PUCCH configuration parameter from a network device.

In an implementation, the PUCCH configuration parameter is carried in RMSI.

In an implementation, the method for configuring a random access parameter further includes: reporting a terminal capability of the terminal, in which the terminal capability represents that the terminal type is the first-type terminal or the second-type terminal.

According to a third aspect of embodiments of the disclosure, an apparatus for configuring a random access parameter is provided. The apparatus is applicable to a network device. The apparatus includes a processing unit.

The processing unit is configured to determine a PUCCH configuration parameter, in which the PUCCH configuration parameter includes a configuration parameter of performing Msg.4 HARQ feedback in a random access process for a first-type terminal and a second-type terminal, and a capability of the first-type terminal is different from a capability of the second-type terminal.

In an implementation, the PUCCH configuration parameter includes a first PUCCH configuration parameter and a second PUCCH configuration parameter; the first PUCCH configuration parameter is partially different from the second PUCCH configuration parameter; and the first PUCCH configuration parameter corresponds to the first-type terminal and the second PUCCH configuration parameter corresponds to the second-type terminal.

In an implementation, the PUCCH configuration parameter includes a common PUCCH configuration parameter for the first-type terminal and the second-type terminal.

In an implementation, at least one of the following parameters in the first PUCCH configuration parameter and the second PUCCH configuration parameter is different:
a PRB located by the PUCCH; a PUCCH format; the PUCCH supporting FH or the PUCCH not supporting FH; a PRB position where the PUCCH supports FH; and an FH width when the PUCCH supporting FH.

In an implementation, the capability of the first-type terminal is stronger than the capability of the second-type terminal;
the first PUCCH configuration parameter includes a configuration parameter supporting FH, and the second PUCCH configuration parameter includes a configuration parameter not supporting FH; and/or an FH width configured in the first PUCCH configuration parameter is greater than an FH width configured in the second PUCCH configuration parameter.

In an implementation, the PUCCH configuration parameter includes a common PUCCH configuration parameter for the first-type terminal and the second-type terminal.

In an implementation, the capability of the first-type terminal is stronger than the capability of the second-type terminal;
the PUCCH configuration parameter includes one or a combination of:
the PUCCH not supporting FH; and the PUCCH supporting FH and an FH width being within a bandwidth range supported by the second-type terminal.

In an implementation, the apparatus for configuring a random access parameter further includes: a sending unit, configured to send the PUCCH configuration parameter.

In an implementation, the PUCCH configuration parameter is carried in RMSI.

In an implementation, the apparatus for configuring a random access parameter further includes a receiving unit. The receiving unit is configured to: receive a terminal capability reported by a terminal, in which the terminal capability represents that the terminal is the first-type terminal or the second-type terminal; and the processing unit is configured to determine a resource for the terminal to perform the Msg.4 HARQ feedback according to the terminal capability.

According to a fourth aspect of embodiments of the disclosure, an apparatus for configuring a random access parameter is provided. The apparatus is applicable to a terminal. The apparatus includes: a processing unit, configured to determine a PUCCH configuration parameter and determine a resource of performing the Msg.4 HARQ feedback in the random access process according to the PUCCH configuration parameter, in which the PUCCH configuration parameter includes a configuration parameter of performing Msg.4 HARQ feedback in a random access process for a first-type terminal and a second-type terminal, and a capability of the first-type terminal is different from a capability of the second-type terminal.

In an implementation, the processing unit is configured to determine the PUCCH configuration parameter by: determining a terminal type, in which the terminal type is the first-type terminal or the second-type terminal, and the capability of the first-type terminal is different from the capability of the second-type terminal; and determining the PUCCH configuration parameter according to the terminal type; the PUCCH configuration parameter including a first PUCCH configuration parameter and a second PUCCH configuration parameter; the first PUCCH configuration parameter being partially different from the second PUCCH configuration parameter; and the first PUCCH configuration parameter corresponding to the first-type terminal, and the second PUCCH configuration parameter corresponding to the second-type terminal.

In an implementation, at least one of the following parameters in the first PUCCH configuration parameter and the second PUCCH configuration parameter is different:
a PRB located by the PUCCH; a PUCCH format; the PUCCH supporting FH or the PUCCH not supporting FH; a PRB position where the PUCCH supports FH; and an FH width when the PUCCH supporting FH.

In an implementation, the capability of the first-type terminal is stronger than the capability of the second-type terminal;
the first PUCCH configuration parameter includes a configuration parameter supporting FH, and the second PUCCH configuration parameter includes a configuration parameter not supporting FH; and/or an FH width configured in the first PUCCH configuration parameter is greater than an FH width configured in the second PUCCH configuration parameter.

In an implementation, the PUCCH configuration parameter includes a common PUCCH configuration parameter for the first-type terminal and the second-type terminal.

In an implementation, the capability of the first-type terminal is stronger than the capability of the second-type terminal;
the PUCCH configuration parameter includes one or a combination of: the PUCCH not supporting FH; and the PUCCH supporting FH and an FH width being within a bandwidth range supported by the second-type terminal.

In an implementation, the apparatus for configuring a random access parameter further includes a receiving unit. The receiving unit is configured to receive the PUCCH configuration parameter from a network device. The processing unit is configured to determine the PUCCH configuration parameter according to the PUCCH configuration parameter received by the receiving unit.

In an implementation, the PUCCH configuration parameter is carried in RMSI.

In an implementation, the apparatus for configuring a random access parameter further includes a sending unit. The sending unit is configured to report a terminal capability of the terminal. The terminal capability represents that the terminal type is the first-type terminal or the second-type terminal.

According to a fifth aspect of embodiments of the disclosure, a device for configuring a random access parameter is provided. The device includes:
a processor; and a memory configured to store instructions executable by the processor.

The processor is configured to perform the method for configuring a random access parameter in the first aspect or in any one implementation of the first aspect.

According to a sixth aspect of embodiments of the disclosure, a device for configuring a random access parameter is provided. The device includes:
a processor; and a memory configured to store instructions executable by the processor.

The processor is configured to perform the method for configuring a random access parameter in the second aspect or in any one implementation of the second aspect.

According to a seventh aspect of embodiments of the disclosure, a non-transitory computer-readable storage medium is provided. When instructions in the storage medium are executed by a processor of a network device, the network vehicle is caused to perform the method for configuring a random access parameter in the first aspect or in any one implementation of the first aspect.

According to a fourth aspect of embodiments of the disclosure, a non-transitory computer-readable storage medium is provided. When instructions in the storage medium are executed by a processor of a mobile terminal, the mobile terminal is caused to perform the method for configuring a random access parameter in the second aspect or in any one implementation of the second aspect.

The technical solutions according to embodiments of the disclosure may include the following beneficial effects. The PUCCH configuration parameter that satisfies capabilities of performing the Msg.4 HARQ feedback in the random access process for the first-type terminal and the second-type terminal with different capabilities, is determined, so that the configuration of the PUCCH configuration parameter for terminals with different capabilities is achieved and communication capabilities of terminals with different capabilities are satisfied.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a diagram illustrating a wireless communication system according to some embodiments.
FIG. 2 is a diagram illustrating that a frequency hopping range exceeds a receiving frequency band range of a redcap terminal.
FIG. 3 is a flowchart illustrating a method for configuring a random access parameter according to some embodiments.
FIG. 4 is a flowchart illustrating a method for configuring a random access parameter according to some embodiments.
FIG. 5 is a diagram illustrating a PUCCH configuration parameter where different frequency hopping widths are configured for a normal UE and a redcap terminal according to some embodiments of the disclosure.
FIG. 6 is a flowchart illustrating a method for configuring a random access parameter according to some embodiments.
FIG. 7 is a flowchart illustrating a method for configuring a random access parameter according to some embodiments.
FIG. 8 is a flowchart illustrating a method for configuring a random access parameter according to some embodiments.
FIG. 9 is a flowchart illustrating a method for configuring a random access parameter according to some embodiments.
FIG. 10 is a flowchart illustrating a method for configuring a random access parameter according to some embodiments.
FIG. 11 is a flowchart illustrating a method for configuring a random access parameter according to some embodiments.
FIG. 12 is a flowchart illustrating a method for configuring a random access parameter according to some embodiments.
FIG. 13 is a block diagram illustrating an apparatus for configuring a random access parameter according to some embodiments.
FIG. 14 is a block diagram illustrating an apparatus for configuring a random access parameter according to some embodiments.
FIG. 15 is a block diagram illustrating a device for configuring a random access parameter according to some embodiments.
FIG. 16 is a block diagram illustrating a device for configuring a random access parameter according to some embodiments.

### DETAILED DESCRIPTION

Reference will now be made in detail to some embodiments, examples of which are illustrated in the accompanying drawings. The following description refers to the accompanying drawings in which the same numbers in different drawings represent the same or similar elements unless otherwise represented. The implementations set forth in the following description of some embodiments do not represent all implementations consistent with embodiments of the disclosure. Instead, they are merely examples of apparatuses and methods consistent with aspects related to embodiments of the disclosure as recited in the appended claims.

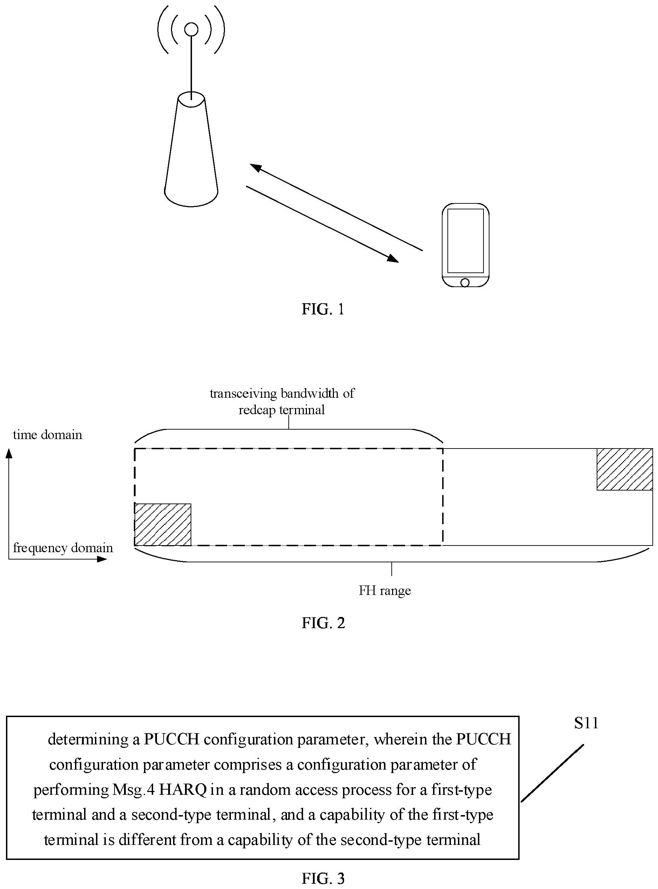

A method for configuring a random access parameter provided in embodiments of the disclosure is applicable to a wireless communication system as illustrated in FIG. 1. As illustrated in FIG. 1, the wireless communication system includes a terminal and a network device. The terminal and the network device send and receive information with each other through wireless resources.

It should be understood that, the wireless communication system as illustrated in FIG. 1 is only illustrated. The wireless communication system may further include other network devices, for example, a core network device, a wireless relay device, a wireless backhaul device and the like, which are not illustrated in FIG. 1. A number of network devices and a number of terminals included in the wireless communication system are not limited in embodiments of the disclosure.

It should be further understood that, the wireless communication system in embodiments of the disclosure is a network that provides wireless communication functions. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA) and carrier sense multiple access with collision avoidance. The network may be classed into a second generation (2G) network, a third generation (3G) network, a fourth generation (4G) network, or a future evolution network such as a fifth generation (5G) according to capacities, rates, delays and other factors of different networks. For example, the 5G network may also be referred to as a new radio (NR) network. For ease of description, the wireless communication network is simply referred to as the network in the disclosure sometimes.

Further, the network device involved in the disclosure may also be referred to as a wireless access network device. The wireless access network device may be a base station, an evolved node B (eNB), a home base station, an access point (AP) in a wireless fidelity (Wi-Fi) system, a wireless relay node, a wireless backhaul node, a transmission point (TP), a transmission and reception point (TRP), or the like. The wireless access network device also may be a next generation node B (gNB) in an NR system. The wireless access network device also may be a component or a part of devices constituting the base station. The network device may be a vehicle-mounted device in an Internet of Vehicles (V2X) communication system. It should be understood that, a specific technology and a specific device form adopted by the network device are not limited in the embodiments of the disclosure.

Further, the terminal involved in the disclosure further may be referred to as a terminal device, a user equipment (UE), a mobile station (MS), a mobile terminal (MT), or the like, which is a device that provides voice and/or data connectivity to a user, for example, a handheld device or vehicle-mounted device with a wireless connection function or the like. At present, some terminals include, for example, mobile phones, pocket personal computers (PPCs), palm computers, personal digital assistants (PDAs), notebook computers, tablet computers, wearable devices, vehicle-mounted devices, or the like. In addition, the terminal device may be the vehicle-mounted device in the V2X communication system. It should be understood that, a specific technology and a specific device form adopted by the terminal are not limited in the embodiments of the disclosure.

The terminal described in embodiments of the disclosure may be understood as a new-type terminal in 5G NR: a reduced capability UE or NR-lite or a redcap terminal. In embodiments of the disclosure, the new terminal is referred to as the redcap terminal.

Similar to an Internet of Things (IoT) device in long term evolution (LTE), the redcap terminal needs to satisfy the following requirements:
- low cost, low complexity
- coverage enhancement to a certain degree
- power saving.

In the related art, a transceiving bandwidth of the redcap terminal matches a capability of the terminal. The transceiving bandwidth of the redcap terminal is limited relative to a normal UE. For example, a maximum UE bandwidth (max UE BW) in an initial access stage is limited. Generally, a bandwidth at frequency band 1 (FR1) is 20 MHz and a bandwidth at FR 2 is 40 MHz. However, in the related art, a physical uplink control channel (PUCCH) configuration needs to be performed in the initial access stage. For example, a PUCCH format carrying a hybrid automatic repeat request of a fourth message (Msg.4 HARQ) is configured in a random access channel (RACH) configuration stage. The PUCCH format carrying the Msg.4 HARQ feedback is PUCCH format 0 and PUCCH format 1. The format 0 is a short PUCCH and does not support intra-slot frequency hopping (FH) and a length of the format 0 may be 1-2 OFDM symbols. The format 1 is a long PUCCH and supports FH and a length of the format 1 may be 4-14 OFDM symbols.

In the related art, when the PUCCH configuration is performed, the network device usually broadcasts a PUCCH configuration parameter. For example, in a system information block (SIB), the network device may broadcast the PUCCH configuration parameter, including a PUCCH format, a physical resource block (PRB) position and whether supporting FH. However, the PUCCH configuration parameter broadcasted by the network device is likely to fail to satisfy a capability of the redcap terminal. For example, when the redcap terminal and the normal UE share an uplink bandwidth part (UL BWP), and if the PUCCH configuration parameter includes intra-slot FH used for the Msg.4 HARQ, a current FH range may exceed a receiving frequency band range of the redcap terminal. FIG. 2 is a diagram illustrating a FH range exceeds a receiving band range of the redcap terminal. Referring to FIG. 2, the redcap terminal and the normal UE receive the intra-slot FH range broadcasted by the terminal on the shared UL BWP during an initial stage. The intra-slot FH range exceeds the receiving bandwidth range of the redcap terminal and may not satisfy the capability of the redcap terminal for the Msg.4 HARQ feedback in the random access process.

A method for configuring a random access parameter is provided in embodiments of the disclosure. In the method for configuring a random access parameter, the PUCCH configuration parameter is enhanced, so that the PUCCH configuration parameter may satisfy the terminal capability of the redcap terminal.

In an implementation, the PUCCH configuration parameter in the initial UL BWP is configured, satisfying capabilities of performing the Msg. 4 HARQ in the random access process for terminals with different types of terminal capabilities.

In embodiments of the disclosure, for convenience of description, any two of terminals with different types are referred to a first-type terminal and a second-type terminal. A capability of the first-type terminal is different from a capability of the second-type terminal. In an example, the first-type terminal may be a normal UE and the second-type terminal may be a redcap terminal.

In embodiments of the disclosure, the PUCCH configuration parameter is configured. The PUCCH configuration parameter satisfies capabilities of performing the Msg.4 HARQ in the random access process for the first-type terminal and the second-type terminal, in which the capability of the first-type terminal is different from the capability of the second-type terminal.

FIG. 3 is a flowchart illustrating a method for configuring a random access parameter according to some embodiments. As illustrated in FIG. 3, the method for configuring a random access parameter is applicable to a network device and includes the following step.

At step S11, a PUCCH configuration parameter is determined.

The PUCCH configuration parameter determined by the network device includes a configuration parameter of performing Msg.4 HARQ in a random access process for a first-type terminal and a second-type terminal.

In an implementation, the configuration parameter of performing the Msg.4 HARQ in the random access process for the first-type terminal and the second-type terminal, determined by the network device, satisfies capabilities of performing the Msg.4 HARQ in the random access process for the first-type terminal and the second-type terminal. The capability of the first-type terminal is different from the capability of the second-type terminal.

In embodiments of the disclosure, the first-type terminal and the second-type terminal may have different capabilities. For example, the capability of the terminal may include at least one of a transmission bandwidth (for example, a receiving bandwidth and/or a sending bandwidth), a number of transmission antennas (for example, receiving antennas and/or sending antennas), a maximum bit number of a transmission block, and a processing delay. The capabilities of the terminals may be different in one or more of: the transceiving bandwidth, the number of transceiving antennas, the maximum bit number of the transmission block, and the processing delay.

In an implementation of embodiments of the disclosure, different PUCCH configuration parameters may be configured for terminals with different capabilities, to satisfy capabilities of performing the Msg.4 HARQ in the random access process for the first-type terminal and the second-type terminal. For example, a first PUCCH configuration parameter may be configured for the first-type terminal and a second PUCCH configuration parameter may be configured for the second-type terminal. The first PUCCH configuration parameter is partially different from the second PUCCH configuration parameter or all parameters in the first PUCCH configuration parameter and the second PUCCH configuration parameter are differently.

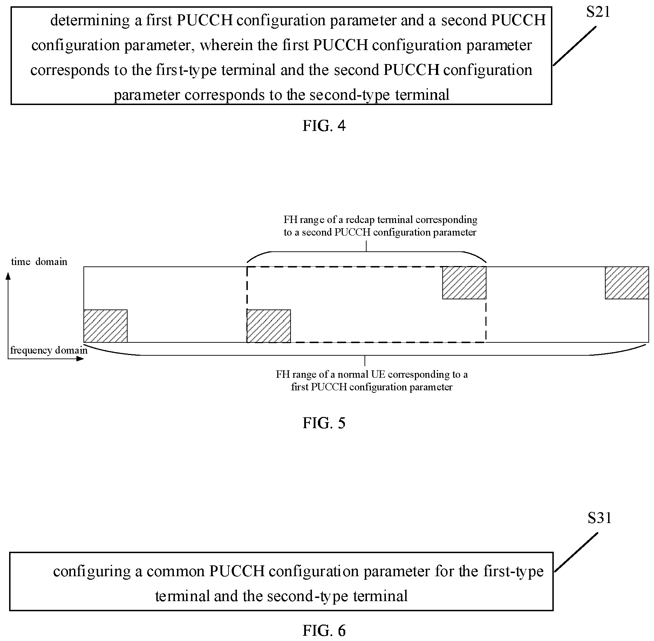

FIG. 4 is a flowchart illustrating a method for configuring a random access parameter according to some embodiments. As illustrated in FIG. 4, the method for configuring a random access parameter is applicable to a network device and includes the following step.

At step S21, a first PUCCH configuration parameter and a second PUCCH configuration parameter are determined.

In the method for configuring a random access parameter in embodiments of the disclosure, the configured PUCCH parameter includes the first PUCCH configuration parameter and the second PUCCH configuration parameter. The first PUCCH configuration parameter corresponds to the first-type terminal and the second PUCCH configuration parameter corresponds to the second-type terminal. The first PUCCH configuration parameter corresponds to the first-type terminal, which may be understood that the first PUCCH configuration parameter satisfies a capability of performing the Msg.4 HARQ in the random access process for the first-type terminal or may be understood that the first PUCCH configuration parameter includes a configuration of a PUCCH carrying the Msg.4 HARQ feedback in the random access process for the first-type terminal. The second PUCCH configuration parameter corresponds to the second terminal, which may be understood that the second PUCCH configuration parameter satisfies a capability of performing the Msg.4 HARQ in the random access process for the second-type terminal or may be understood that the second PUCCH configuration parameter includes a configuration of a PUCCH carrying the Msg.4 HARQ feedback in the random access process for the second-type terminal.

In the method for configuring a random access parameter in embodiments of the disclosure, the first PUCCH configuration parameter is partially different from the second PUCCH configuration parameter.

In an example, an initial UL BWP includes the first PUCCH configuration and the second PUCCH configuration. The PUCCH configuration includes a configuration of a PUCCH carrying the Msg.4 HARQ feedback in the random access process. The first PUCCH configuration is different from the second PUCCH configuration. The first PUCCH configuration is used for the first-type terminal and the second PUCCH configuration is used for the second-type terminal. A capability of the first-type terminal is different from a capability of the second-type terminal. The terminal capability includes a transceiving bandwidth of the terminal.

In the method for configuring a random access parameter provided in embodiments of the disclosure, at least one of the following parameters in the first PUCCH configuration parameter and the second PUCCH configuration parameter is different: a PRB located by the PUCCH being different; a PUCCH format being different; whether supporting FH being different; a PRB position where the PUCCH supports FH being different; and an FH width when the PUCCH supporting FH being different.

In an example of the method for configuring a random access parameter provided in embodiments of the disclosure, the capability of the first-type terminal is stronger than the capability of the second-type terminal. For example, the first-type terminal may be a normal UE and the second-type terminal may be a redcap terminal. A transceiving bandwidth supported by the normal UE is greater than a transceiving bandwidth supported by the redcap terminal. The first PUCCH configuration parameter is partially different from the second PUCCH configuration parameter. For example, the first PUCCH configuration parameter includes a configuration parameter supporting FH and the second PUCCH configuration parameter includes a configuration parameter not supporting FH; and/or an FH width configured in the first PUCCH configuration parameter is greater than an FH width configured in the second PUCCH configuration parameter.

FIG. 5 is a diagram illustrating a PUCCH configuration parameter with different FH widths configured for a normal UE and a redcap terminal. As illustrated in FIG. 5, an FH width configured in the first PUCCH configuration parameter used by the normal UE is greater than an FH width configured in the second PUCCH configuration parameter used by the redcap terminal. The FH width configured in the first PUCCH configuration parameter matches a transceiving bandwidth of the normal UE and may not exceed the transceiving bandwidth of the normal UE during FH. The FH width configured in the second PUCCH configuration parameter matches a transceiving bandwidth of the redcap terminal and may not exceed the transceiving bandwidth of the redcap terminal during FH. The first PUCCH configuration parameter satisfies a capability of performing the Msg.4 HARQ in the random access process for the first-type terminal, and the second PUCCH configuration parameter satisfies a capability of performing the Msg.4 HARQ in the random access process for the second-type terminal.

In an implementation of embodiments of the disclosure, the PUCCH configuration parameter that satisfy terminals with different capabilities may be configured, to satisfy capabilities of performing the Msg.4 HARQ in the random access process for the first-type terminal and the second-type terminal. That is, the PUCCH configuration parameter includes a common PUCCH configuration parameter for the first-type terminal and the second-type terminal.

FIG. 6 is a flowchart illustrating a method for configuring a random access parameter according to some embodiments. As illustrated in FIG. 6, the method for configuring a random access parameter is applicable to a network device and includes the following step.

At step S31, a common PUCCH configuration parameter for the first-type terminal and the second-type terminal is configured.

In some embodiments, the capability of the first-type terminal is stronger than the capability of the second-type terminal. For example, the first-type terminal may be a normal UE and the second-type terminal may be a redcap terminal. The common PUCCH configuration parameter for the first-type terminal and the second-type terminal may be at least one of or a combination of the PUCCH not supporting FH; and the PUCCH supporting FH and an FH width being within a bandwidth range supported by the second-type terminal. In other words, the common PUCCH configuration parameter for the first-type terminal and the second-type terminal satisfies a capability of the second-type terminal, that is, satisfies capabilities of the first-type terminal and the second-type terminal at the same time.

In an example, a PUCCH configuration parameter set is configured by the network device, to satisfy capabilities of performing Msg.4 HARQ in the random access process for the first-type terminal and the second-type terminal. For example, the configured PUCCH does not use FH, or an FH width of the configured PUCCH is within a capability range of the second-type terminal. In this case, the first-type terminal and the second-type terminal share the same PUCCH configuration.

In embodiments of the disclosure, the network device may send the determined PUCCH configuration parameter to the terminal when determining the PUCCH configuration parameter that satisfies capabilities for the first-type terminal and the second-type terminal to perform the Msg. 4 HARQ in the random access process, and the terminal determines the corresponding PUCCH configuration according to the terminal type, and determines a specific PUCCH resource according to the PUCCH configuration. The terminal transmits the Msg.4 HARQ on the determined PUCCH resource.

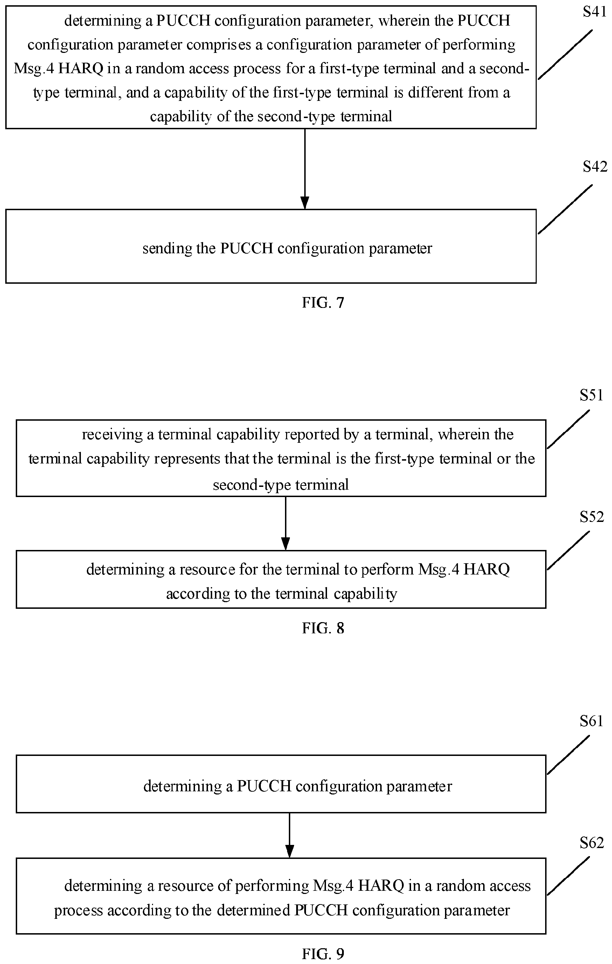

FIG. 7 is a flowchart illustrating a method for configuring a random access parameter according to some embodiments. As illustrated in FIG. 7, the method for configuring a random access parameter is applicable to a network device and includes the following steps.

At step S41, a PUCCH configuration parameter is determined.

In embodiments of the disclosure, the PUCCH configuration parameter includes a configuration parameter of performing Msg.4 HARQ in a random access process for the first-type terminal and the second-type terminal.

In an implementation, the configuration parameter of performing the Msg.4 HARQ in the random access process for the first-type terminal and the second-type terminal satisfies capabilities of performing the Msg.4 HARQ in the random access process for the first-type terminal and the second-type terminal. The capability of the first-type terminal is different from the capability of the second-type terminal. On one hand, the PUCCH configuration parameter may include a first PUCCH configuration parameter and a second PUCCH configuration parameter. On the other hand, the PUCCH configuration parameter may include a common PUCCH configuration parameter for the first-type terminal and the second-type terminal.

At step S42, a PUCCH configuration parameter is sent.

In the method for configuring a random access parameter provided in embodiments of the disclosure, the PUCCH configuration parameter is sent by the network device by means of broadcasting.

In an implementation, the network device in embodiments of the disclosure may carry the PUCCH configuration parameter in remaining minimum system information (RMSI). For example, a first PUCCH configuration parameter and a second PUCCH configuration parameter are carried in RMSI. For another example, a common PUCCH configuration parameter for the first-type terminal and the second-type terminal is carried in RMSI.

In the method for configuring a random access parameter provided in embodiments of the disclosure, the network device may receive a terminal capability reported by the terminal. The terminal capability represents that the terminal is the first-type terminal or the second-type terminal. The network device may determine a resource for the terminal to perform the HARQ feedback according to the terminal capability and further may receive the HARQ feedback according to the determined resource.

FIG. 8 is a flowchart illustrating a method for configuring a random access parameter according to some embodiments. As illustrated in FIG. 8, the method for configuring a random access parameter is applicable to a network device and includes the following steps.

At step S51, a terminal capability reported by a terminal is received. The terminal capability represents that terminal is the first-type terminal or the second-type terminal.

At step S52, a resource for the terminal to perform the Msg.4 HARQ feedback is determined according to the terminal capability.

The network device in embodiments of the disclosure determines the resource for the terminal to perform the Msg.4 HARQ according to the terminal capability. For example, on one hand, the resource may be a resource corresponding to the first PUCCH configuration parameter and a resource corresponding to the second PUCCH configuration parameter. On the other hand, the network device determines the resource for the terminal to perform the Msg.4 HARQ according to the terminal capability. For example, the resource may include a resource corresponding to the common PUCCH configuration parameter for the first-type terminal and the second-type terminal.

In the method for configuring a random access parameter provided in embodiments of the disclosure, the PUCCH configuration parameter determined by the network device satisfies capabilities for the first-type terminal and the second-type terminal to perform the Msg. 4 HARQ in the random access process, to enhance the PUCCH configuration parameter, so that the PUCCH configuration parameter may satisfy the terminal capability of the redcap terminal.

FIG. 9 is a flowchart illustrating a method for configuring a random access parameter according to some embodiments. As illustrated in FIG. 9, the method for configuring a random access parameter is applicable to a terminal and includes the following steps.

At step S61, a PUCCH configuration parameter is determined.

At step S62, a resource of performing Msg.4 HARQ in a random access process is determined according to the determined PUCCH configuration parameter.

In the method for configuring a random access parameter provided in embodiments of the disclosure, the PUCCH configuration parameter includes a configuration parameter of performing the Msg.4 HARQ in the random access process for the first-type terminal and the second-type terminal.

In an implementation, the configuration parameter of performing the Msg.4 HARQ in the random access process for the first-type terminal and the second-type terminal satisfies capabilities of performing the Msg.4 HARQ in the random access process for the first-type terminal and the second-type terminal. The capability of the first-type terminal is different from the capability of the second-type terminal.

In embodiments of the disclosure, the first-type terminal and the second-type terminal may have different capabilities. For example, the terminal capability may be a transceiving bandwidth, a number of transceiving antennas, a maximum bit number of a transmission block, and a processing delay. The capability of the terminal may be different in one or more of: the transceiving bandwidth, the number of transceiving antennas, the maximum bit number of the transmission block, or the processing delay.

The terminal may determine the PUCCH configuration parameter corresponding to the terminal type according to the terminal type in response to determining the PUCCH configuration parameter, and determine the PUCCH resource according to the determined PUCCH configuration parameter. The terminal transmits the Msg.4 HARQ on the determined PUCCH resource.

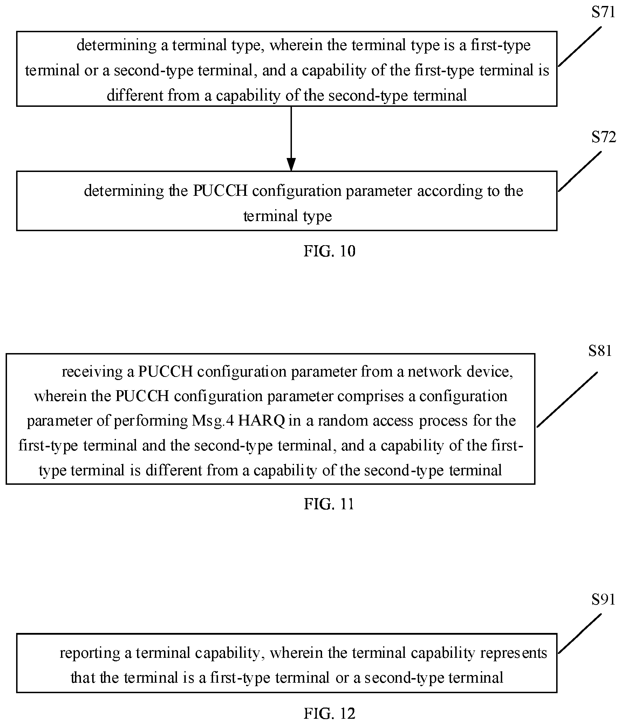

FIG. 10 is a flowchart illustrating a method for configuring a random access parameter according to some embodiments. As illustrated in FIG. 10, the method for configuring a random access parameter is applicable to a terminal and includes the following steps.

At step S71, a terminal type is determined. The terminal type is a first-type terminal or a second-type terminal, and a capability of the first-type terminal is different from a capability of the second-type terminal.

At step S72, the PUCCH configuration parameter is determined according to the terminal type.

In the method for configuring a random access parameter in embodiments of the disclosure, the PUCCH configuration parameter includes a first PUCCH configuration parameter and a second PUCCH configuration parameter. The first PUCCH configuration parameter is partially different from the second PUCCH configuration parameter. The first PUCCH configuration parameter corresponds to the first-type terminal and the second PUCCH configuration parameter corresponds to the second-type terminal. In other words, if the determined terminal type is the first-type terminal, the PUCCH configuration parameter determined by the terminal includes the first PUCCH configuration parameter. The first PUCCH configuration parameter satisfies a capability of performing the Msg.4 HARQ in the random access process for the first-type terminal or it may be understood that the first PUCCH configuration parameter includes a configuration of a PUCCH carrying the Msg.4 HARQ feedback in the random access process for the first-type terminal. If the determined terminal type is the second-type terminal, the PUCCH configuration parameter determined by the terminal includes the second PUCCH configuration parameter. The second PUCCH configuration parameter satisfies a capability of performing the Msg.4 HARQ in the random access process for the second-type terminal or it may be understood that the second PUCCH configuration parameter includes a configuration of a PUCCH carrying the Msg.4 HARQ feedback in the random access process for the second-type terminal.

In the method for configuring a random access parameter provided in embodiments of the disclosure, the at least one of the following parameters in the first PUCCH configuration parameter and the second PUCCH configuration parameter is different: a PRB located by the PUCCH being different; a PUCCH format being different; whether supporting FH being different; a PRB position where the PUCCH supports FH being different; and an FH width when the PUCCH supporting FH being different.

In an example of the method for configuring a random access parameter provided in embodiments of the disclosure, the capability of the first-type terminal is stronger than the capability of the second-type terminal. For example, the first-type terminal may be a normal UE and the second-type terminal may be a redcap terminal. A transceiving bandwidth supported by the normal UE is greater than a transceiving bandwidth supported by the Redcap terminal. The first PUCCH configuration parameter is partially different from the second PUCCH configuration parameter. For example, the first PUCCH configuration parameter includes a configuration parameter supporting FH and the second PUCCH configuration parameter includes a configuration parameter not supporting FH; and/or an FH width configured in the first PUCCH configuration parameter is greater than an FH width configured in the second PUCCH configuration parameter.

In the method for configuring a random access parameter in embodiments of the disclosure, in another implementation, the PUCCH configuration parameter includes a common PUCCH configuration parameter for the first-type terminal and the second-type terminal. The terminal may determine a PUCCH resource directly according to the configured PUCCH configuration parameter without differentiating the terminal type, and transmit Msg.4 HARQ on the determined PUCCH resource.

In embodiments of the disclosure, the capability of the first-type terminal is stronger than the capability of the second-type terminal. For example, the first-type terminal may be a normal UE and the second-type terminal may be a redcap terminal. The common PUCCH configuration parameter for the first-type terminal and the second-type terminal may include one or a combination of: the PUCCH not supporting FH; and the PUCCH supporting FH, and an FH width being within a bandwidth range supported by the second-type terminal. In other words, the common PUCCH configuration parameter for the first-type terminal and the second-type terminal satisfies a capability of the second-type terminal, that is, satisfies capabilities of the first-type terminal and the second-type terminal simultaneously.

FIG. 11 is a flowchart illustrating a method for configuring a random access parameter according to some embodiments. As illustrated in FIG. 9, the method for configuring a random access parameter is applicable to a terminal and includes the following step.

At step S81, a PUCCH configuration parameter is received from a network device.

In embodiments of the disclosure, the PUCCH configuration parameter includes a configuration parameter of performing Msg.4 HARQ in a random access process for the first-type terminal and the second-type terminal.

In an implementation, the configuration parameter of performing the Msg.4 HARQ in the random access process for the first-type terminal and the second-type terminal satisfies capabilities of performing the Msg.4 HARQ in the random access process for the first-type terminal and the second-type terminal. The capability of the first-type terminal is different from the capability of the second-type terminal. On one hand, the PUCCH configuration parameter includes a first PUCCH configuration parameter and a second PUCCH configuration parameter. On the other hand, the PUCCH configuration parameter may include a common PUCCH configuration parameter for the first-type terminal and the second-type terminal.

In an implementation, the PUCCH configuration parameter in embodiments of the disclosure is carried in RMSI. The terminal may determine the PUCCH configuration parameter according to the received RMSI. For example, the terminal may determine the first PUCCH configuration parameter and the second PUCCH configuration parameter according to the received RMSI. For another example, the terminal may determine the common PUCCH configuration parameter for the first-type terminal and the second-type terminal according to the received RMSI.

In the method for configuring a random access parameter provided in embodiments of the disclosure, the terminal may report a terminal capability. The terminal capability represents that the terminal is the first-type terminal or the second-type terminal, so that the network device may determine a resource for the terminal to perform the HARQ feedback according to the terminal capability and further may receive the HARQ feedback according to the determined resource.

FIG. 12 is a flowchart illustrating a method for configuring a random access parameter according to some embodiments. As illustrated in FIG. 12, the method for configuring a random access parameter is applicable to a terminal and includes the following step.

At step S91, a terminal capability is reported by the terminal. The terminal capability represents that the terminal is a first-type terminal or a second-type terminal.

In embodiments of the disclosure, the terminal reports the terminal capability, so that the network device determines a resource for the terminal to perform the Msg.4 HARQ according to the terminal capability. On one hand, the network device determines a resource for the terminal to perform the Msg.4 HARQ according to the terminal capability. The resource may be a resource corresponding to the first PUCCH configuration parameter and a resource corresponding to the second PUCCH configuration parameter. On the other hand, the network device determines a resource for the terminal to perform the Msg.4 HARQ according to the terminal capability. For example, the resource may include a resource corresponding to the common PUCCH configuration parameter for the first-type terminal and the second-type terminal.

In the method for configuring a random access parameter provided in embodiments of the disclosure, the terminal determines the PUCCH configuration parameter according to the terminal type, and determines the PUCCH resource of performing the Msg.4 HARQ in the random access process according to the PUCCH configuration parameter, which may satisfy the PUCCH configuration parameter matching the terminal type and may further satisfy terminal capabilities of different types of terminals.

It may be understood that the method for configuring a random access parameter provided in embodiments of the disclosure is applicable to a process of achieving a random access parameter configuration in an interaction process of the network device and the terminal. A process that interaction between the network device and the terminal achieves the random access parameter configuration is not described in embodiments of the disclosure.

It needs to be noted that, those skilled in the art may understand that various implementations/embodiments involved in embodiments of the disclosure may be used in combination with the above embodiments or may be used independently. Whether independently used or used in combination with the above embodiments, the implementation principles are similar. In embodiments of the disclosure, part of embodiments is illustrated by the implementation used together; it may be understood by those skilled in the art that the examples are not a limitation of embodiments of the disclosure.

According to a same conception, an apparatus for configuring a random access parameter is further provided in embodiments of the disclosure.

It may be understood that, the apparatus for configuring a random access parameter provided in embodiments of the disclosure includes hardware structures and/or software modules that perform various functions in order to achieve the above functions. In combination with modules and algorithm steps of examples described in embodiments of the disclosure, the embodiments of the disclosure may be implemented in a form of hardware or a combination of hardware and computer software. Whether a certain function is executed by the hardware or the computer software driving the hardware depends on specific applications and design constraints of the technical solutions. Those skilled in the art may adopt different methods for each specific application to implement the described functions, but such implementation should not be considered as beyond the scope of the technical solutions in embodiments of the disclosure.

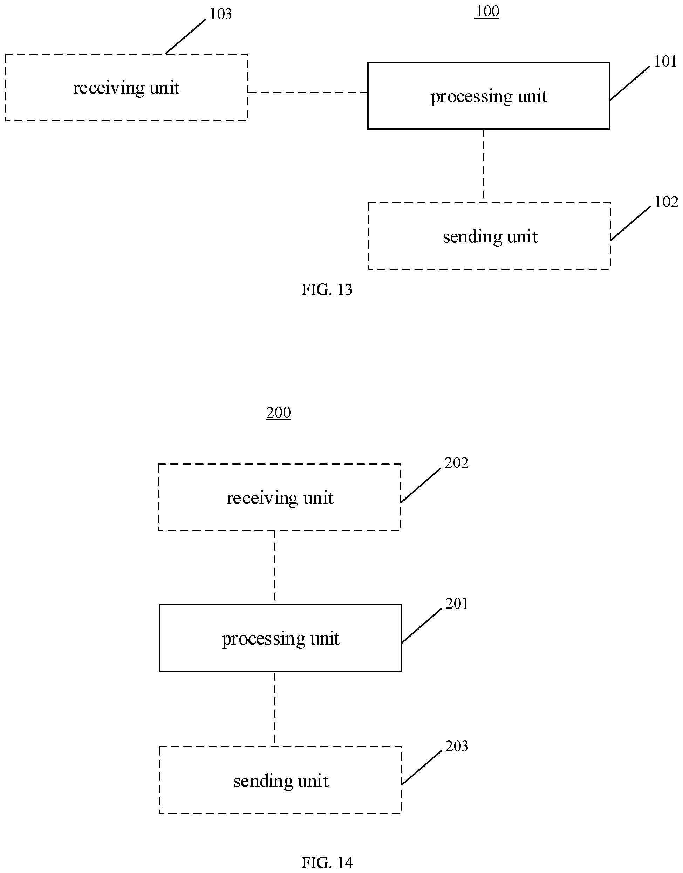

FIG. 13 is a block diagram illustrating an apparatus for configuring a random access parameter according to some embodiments. As illustrated in FIG. 13, an apparatus 100 for configuring a random access parameter is applicable to a network device and includes a processing unit 101.

The processing unit 101 is configured to determine a PUCCH configuration parameter. The PUCCH configuration parameter includes a configuration parameter of performing Msg.4 HARQ feedback in a random access process for a first-type terminal and a second-type terminal, and a capability of the first-type terminal is different from a capability of the second-type terminal.

In an implementation, the PUCCH configuration parameter includes a first PUCCH configuration parameter and a second PUCCH configuration parameter; the first PUCCH configuration parameter is partially different from the second PUCCH configuration parameter; and the first PUCCH configuration parameter corresponds to the first-type terminal and the second PUCCH configuration parameter corresponds to the second-type terminal.

In an implementation, the PUCCH configuration parameter includes a common PUCCH configuration parameter for the first-type terminal and the second-type terminal.

In an implementation, at least one of the following parameters in the first PUCCH configuration parameter and the second PUCCH configuration parameter is different: a PRB located by the PUCCH; a PUCCH format; the PUCCH supporting FH or the PUCCH not supporting FH; a PRB position where the PUCCH supports FH; and an FH width when the PUCCH supporting FH.

In an implementation, the capability of the first-type terminal is stronger than the capability of the second-type terminal.

The first PUCCH configuration parameter includes a configuration parameter supporting FH, and the second PUCCH configuration parameter includes a configuration parameter not supporting FH. And/or, an FH width configured in the first PUCCH configuration parameter is greater than an FH width configured in the second PUCCH configuration parameter.

In an implementation, the PUCCH configuration parameter includes a PUCCH configuration parameter for the first-type terminal and the second-type terminal.

In an implementation, the capability of the first-type terminal is stronger than the capability of the second-type terminal.

The PUCCH configuration parameter includes one or a combination of:
the PUCCH not supporting FH; and the PUCCH supporting FH and an FH width being within a bandwidth range supported by the second-type terminal.

In an implementation, the apparatus 100 for configuring a random access parameter further includes a sending unit 102. The sending unit 102 is configured to send the PUCCH configuration parameter.

In an implementation, the PUCCH configuration parameter is carried in RMSI.

In an implementation, the apparatus 100 for configuring a random access parameter further includes a receiving unit 103. The receiving unit 103 is configured to receive a terminal capability reported by a terminal. The terminal capability represents that terminal is the first-type terminal or the second-type terminal. The processing unit 101 is configured to determine a resource for the terminal to perform the Msg.4 HARQ according to the terminal capability.

FIG. 14 is a block diagram illustrating an apparatus for configuring a random access parameter according to some embodiments. As illustrated in FIG. 14, an apparatus 200 for configuring a random access parameter is applicable to a terminal. The apparatus 200 for configuring a random access parameter includes a processing unit 201.

The processing unit 201 is configured to determine a PUCCH configuration parameter and determine a resource of performing the Msg.4 HARQ feedback in the random access process according to the PUCCH configuration parameter. The PUCCH configuration parameter includes a configuration parameter of performing Msg.4 HARQ feedback in a random access process for a first-type terminal and a second-type terminal.

In an implementation, the processing unit 201 is configured to determine the PUCCH configuration parameter by: determining a terminal type, in which the terminal type is the first-type terminal or the second-type terminal, and the capability of the first-type terminal is different from the capability of the second-type terminal; and determining the PUCCH configuration parameter according to the terminal type. The PUCCH configuration parameter includes a first PUCCH configuration parameter and a second PUCCH configuration parameter. The first PUCCH configuration parameter is partially different from the second PUCCH configuration parameter. The first PUCCH configuration parameter corresponds to the first-type terminal, and the second PUCCH configuration parameter corresponds to the second-type terminal.

In an implementation, at least one of the following parameters in the first PUCCH configuration parameter and the second PUCCH configuration parameter is different:
a PRB located by the PUCCH; a PUCCH format; the PUCCH supporting FH or the PUCCH not supporting FH; a PRB position where the PUCCH supports FH; and an FH width when the PUCCH supporting FH.

In an implementation, the capability of the first-type terminal is stronger than the capability of the second-type terminal.

The first PUCCH configuration parameter includes a configuration parameter supporting FH, and the second PUCCH configuration parameter includes a configuration parameter not supporting FH. And/or an FH width configured in the first PUCCH configuration parameter is greater than an FH width configured in the second PUCCH configuration parameter.

In an implementation, the PUCCH configuration parameter includes a PUCCH configuration parameter for the first-type terminal and the second-type terminal.

In an implementation, the capability of the first-type terminal is stronger than the capability of the second-type terminal.

The PUCCH configuration parameter includes one or a combination of the PUCCH not supporting FH; and the PUCCH supporting FH and an FH width being within a bandwidth range supported by the second-type terminal.

In an implementation, the apparatus 200 for configuring a random access parameter further includes a receiving unit 202. The receiving unit 202 is configured to receive a PUCCH configuration parameter from a network device. The processing unit 201 is configured to determine the PUCCH configuration parameter according to the PUCCH configuration parameter received by the receiving unit.

In an implementation, the PUCCH configuration parameter is carried in RMSI.

In an implementation, the apparatus 200 for configuring a random access parameter further includes a sending unit 203. The sending unit 203 is configured to report a terminal capability of the terminal. The terminal capability represents that the terminal type is the first-type terminal or the second-type terminal.

With regard to the apparatus in the above embodiments, the specific way in which each module performs the operation has been described in detail in the embodiments of the method and will not be elaborated herein.

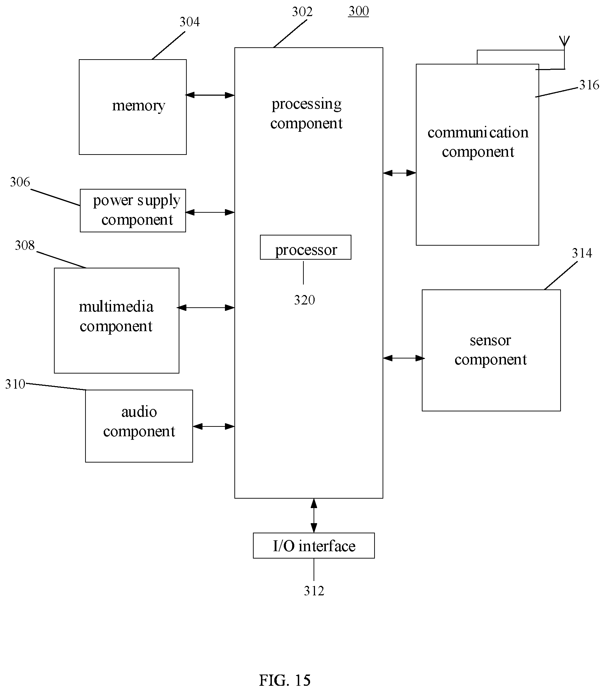

FIG. 15 is a block diagram illustrating a device for configuring a random access parameter according to some embodiments. For example, the device 300 may be a mobile phone, a computer, a digital broadcasting terminal, a messaging device, a game console, a tablet device, a medical equipment, a fitness equipment, a personal digital assistant, etc.

As illustrated in FIG. 15, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above methods. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on communication standard, such as wireless fidelity (Wi-Fi), 2G or 3G, or their combination. In some embodiments, the communication component 316 receives broadcast signals or broadcast-related information from an external broadcast management system via a broadcast channel. In some embodiments, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In some embodiments, the device 300 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above methods.

In some embodiments, a non-transitory computer readable storage medium is further provided which includes instructions, such as the memory 304 including instructions. The instructions may be executed by the processor 320 of the device 300 to complete the above methods. For example, the non-transitory computer-readable storage medium may be a ROM, a random access memory (RAM), a CD-ROM, a magnetic tape, a floppy disk, an optical data storage device, etc.

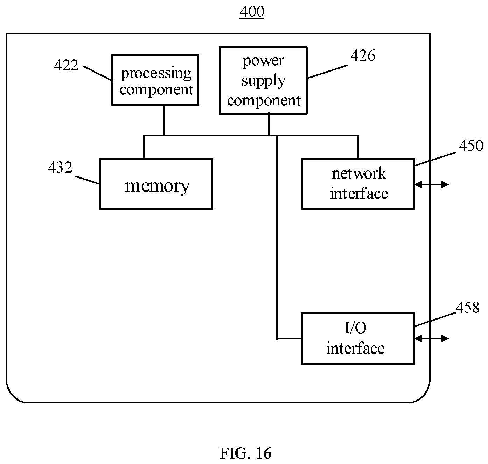

FIG. 16 is a block diagram illustrating a device for configuring a random access parameter according to some embodiments. For example, the device 400 may be provided as a server. As illustrated in FIG. 16, the device 400 includes a processing component 422, which further includes one or more processors, and memory resources represented by a memory 432, which are configured to store instructions executed by the processing component 422, for example, an application. The application stored in the memory 432 may include one or more modules each of which corresponds to a set of instructions. In addition, the processing component 422 is configured to execute instructions, to perform the above methods.

The device 400 may further include a power supply component 426 configured to execute power management of the device 400, and a wired or wireless network interface 450 configured to connect the device 400 to a network, and an input/output(I/O) interface 458. The device 400 may operate an operating system stored in the memory 432, for example, Windows Server^{™}, Mac OS X^{™}, Unix^{™}, Linux^{™}, FreeBSD^{™}.

In some embodiments, a non-transitory computer-readable storage medium including instructions is further provided, for example, the memory 432 including instructions. The instructions may be executed by the processing component 422 of the device 400 to complete the above methods. For example, the non-transitory computer-readable storage medium may be a ROM, a RAM, a CD-ROM, a magnetic tape, a floppy disk, an optical data storage device, etc.

It may be further understood that, "a plurality of" or "multiple" in the disclosure means two or above, which is similar to other quantifiers. The term may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this disclosure, first information may also be referred to as second information, and similarly, second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims

## Claims

1. A method for configuring a random access parameter, applicable to a network device, the method comprising:
determining a physical uplink control channel (PUCCH) configuration parameter, wherein the PUCCH configuration parameter comprises a configuration parameter of performing hybrid automatic repeat request feedback of a fourth message (Msg.4 HARQ feedback) in a random access process for a first-type terminal and a second-type terminal, and a capability of the first-type terminal is different from a capability of the second-type terminal.

2. The method of claim 1, wherein the PUCCH configuration parameter comprises a first PUCCH configuration parameter and a second PUCCH configuration parameter;
the first PUCCH configuration parameter is partially different from the second PUCCH configuration parameter; and
the first PUCCH configuration parameter corresponds to the first-type terminal and the second PUCCH configuration parameter corresponds to the second-type terminal.

3. The method of claim 2, wherein at least one of the following parameters in the first PUCCH configuration parameter and the second PUCCH configuration parameter is different:
a physical resource block (PRB) located by the PUCCH;
a PUCCH format;
the PUCCH supporting frequency hopping (FH) or the PUCCH not supporting FH;
a PRB position where the PUCCH supports FH; and
an FH width when the PUCCH supporting FH.

4. The method of claim 2 or 3, wherein the capability of the first-type terminal is stronger than the capability of the second-type terminal;
the first PUCCH configuration parameter comprises a configuration parameter supporting FH, and the second PUCCH configuration parameter comprises a configuration parameter not supporting FH; and/or
an FH width configured in the first PUCCH configuration parameter is greater than an FH width configured in the second PUCCH configuration parameter.

5. The method of claim 1, wherein the PUCCH configuration parameter comprises a common PUCCH configuration parameter for the first-type terminal and the second-type terminal.

6. The method of claim 5, wherein the capability of the first-type terminal is stronger than the capability of the second-type terminal;
the PUCCH configuration parameter comprises one or a combination of:
the PUCCH not supporting FH; and
the PUCCH supporting FH and an FH width being within a bandwidth range supported by the second-type terminal.

7. The method of any one of claims 1 to 6, further comprising:
sending the PUCCH configuration parameter.

8. The method of claim 7, wherein the PUCCH configuration parameter is carried in remaining minimum system information (RMSI).

9. The method of claim 1, further comprising:
receiving a terminal capability reported by a terminal, wherein the terminal capability represents that the terminal is the first-type terminal or the second-type terminal; and
determining a resource for the terminal to perform the Msg.4 HARQ feedback according to the terminal capability.

10. A method for configuring a random access parameter, applicable to a terminal, the method comprising:
determining a PUCCH configuration parameter, wherein the PUCCH configuration parameter comprises a configuration parameter of performing Msg.4 HARQ feedback in a random access process for a first-type terminal and a second-type terminal, and a capability of the first-type terminal is different from a capability of the second-type terminal; and
determining a resource of performing the Msg.4 HARQ feedback in the random access process according to the PUCCH configuration parameter.

11. The method of claim 10, wherein determining the PUCCH configuration parameter comprises:
determining a terminal type, wherein the terminal type is the first-type terminal or the second-type terminal, and the capability of the first-type terminal is different from the capability of the second-type terminal; and
determining the PUCCH configuration parameter according to the terminal type;
the PUCCH configuration parameter comprising a first PUCCH configuration parameter and a second PUCCH configuration parameter;
the first PUCCH configuration parameter being partially different from the second PUCCH configuration parameter; and
the first PUCCH configuration parameter corresponding to the first-type terminal and the second PUCCH configuration parameter corresponding to the second-type terminal.

12. The method of claim 11, wherein at least one of the following parameters in the first PUCCH configuration parameter and the second PUCCH configuration parameter is different:
a PRB located by the PUCCH;
a PUCCH format;
the PUCCH supporting FH or the PUCCH not supporting FH;
a PRB position where the PUCCH supports FH; and
an FH width when the PUCCH supporting FH.

13. The method of claim 11 or 12, wherein the capability of the first-type terminal is stronger than the capability of the second-type terminal;
the first PUCCH configuration parameter comprises a configuration parameter supporting FH, and the second PUCCH configuration parameter comprises a configuration parameter not supporting FH; and/or
an FH width configured in the first PUCCH configuration parameter is greater than an FH width configured in the second PUCCH configuration parameter.

14. The method of claim 10, wherein the PUCCH configuration parameter comprises a common PUCCH configuration parameter for the first-type terminal and the second-type terminal.

15. The method of claim 14, wherein the capability of the first-type terminal is stronger than the capability of the second-type terminal; and
the PUCCH configuration parameter comprises one or a combination of:
the PUCCH not supporting FH; and
the PUCCH supporting FH and an FH width being within a bandwidth range supported by the second-type terminal.

16. The method of any one of claims 10 to 15, wherein determining the PUCCH configuration parameter comprises:
receiving the PUCCH configuration parameter from a network device.

17. The method of claim 16, wherein the PUCCH configuration parameter is carried in RMSI.

18. The method of claim 10, further comprising:
reporting a terminal capability of the terminal, wherein the terminal capability represents that the terminal type is the first-type terminal or the second-type terminal.

19. An apparatus for configuring a random access parameter, applicable to a network device, the apparatus comprising:
a processing unit, configured to determine a PUCCH configuration parameter, wherein the PUCCH configuration parameter comprises a configuration parameter of performing Msg.4 HARQ feedback in a random access process for a first-type terminal and a second-type terminal, and a capability of the first-type terminal is different from a capability of the second-type terminal.

20. An apparatus for configuring a random access parameter, applicable to a terminal, the apparatus comprising:
a processing unit, configured to determine a PUCCH configuration parameter and determine a resource of performing the Msg.4 HARQ feedback in the random access process according to the PUCCH configuration parameter, wherein the PUCCH configuration parameter comprises a configuration parameter of performing Msg.4 HARQ feedback in a random access process for a first-type terminal and a second-type terminal, and a capability of the first-type terminal is different from a capability of the second-type terminal.

21. A device for configuring a random access parameter, comprising:
a processor; and
a memory for storing instructions executable by the processor;
wherein the processor is configured to perform the method for configuring a random access parameter of any one of claims 1 to 9.

22. A device for configuring a random access parameter, comprising:
a processor; and
a memory for storing instructions executable by the processor;
wherein the processor is configured to perform the method for configuring a random access parameter of any one of claims 10 to 18.

23. A non-transitory computer-readable storage medium, wherein when instructions in the storage medium are executed by a processor of a network device, the network device is caused to perform the method for configuring a random access parameter of any one of claims 1 to 9.

24. A non-transitory computer-readable storage medium, wherein when instructions in the storage medium are executed by a processor of a mobile terminal, the mobile terminal is caused to perform the method for configuring a random access parameter of any one of claims 10 to 18.
